# EUROPEAN PATENT SPECIFICATION

(11) **EP 2 405 988 B1**
(45) Date of publication and mention of the grant of the patent: **10.04.2019**
(21) Application number: 09748744.1
(22) Date of filing: 23.10.2009
(51) Int. Cl.: B01D 39/16

(54) **FILTER WITH HIGH FILTRATION CAPACITY**
FILTER HOHER FILTRATIONSKAPAZITÄT
FILTRE À GRANDE CAPACITÉ DE FILTRATION

(30) Priority: 13.03.2009 IT MI20090381
(43) Date of publication of application: 18.01.2012
(73) Proprietor: Losma S.p.a., 24035 Curno (IT)
(72) Inventor: POLA, Carlo, 10074 Lanzo Torinese (IT)
(74) Representative: Modiano, Micaela Nadia
(86) International application number: PCT/EP2009/064012
(87) International publication number: WO 2010/102682

(56) References cited:
- WO-A1-2007/041620
- WO-A2-2008/005500
- DE-B3-102006 049 815
- DATABASE WPI Week 200879 Thomson Scientific, London, GB; AN 2008-N63092 XP002561736 & JP 2008 274525 A (ASAHI KASEI KK) 13 November 2008 (2008-11-13)

## Description

### Technical field

The present invention relates to a filter with high filtration capacity. More particularly, the invention relates to a filter in which the filtering element has differentiated filtration depending on the density.

### Background art

As is known, filters are commercially available in which the filtering material is made of synthetic material or glass fiber. However, such filters suffer some drawbacks: first of all, problems for workers who manufacture them, handle them, use them and destroy them. These filters in fact are not environmentally compatible, environmentally sustainable, biodegradable and recoverable by heat. Moreover, recovery of spent filters requires preliminary operations for separation from parts that cannot be incinerated and subsequent recovery by heating in any case contributes to the greenhouse effect.

Another type of filter consists in filters in which the filtering element is made of plant fiber, such as cotton and cellulose, for industrial applications in the field of both liquids and gases. These filtering elements suffer the drawback of being obtained from wood and therefore necessarily require the cutting of trees.

DE 10 2006 049815 B3 discloses a hemp fiber filter packing, which is free of any binder or other additives.

### Disclosure of the invention

The aim of the present invention is to provide a filter whose filtration structure can be used to filter liquid and gaseous fluids, fibers, dust, pollens, aerosols, vapors, fumes, gases and mists.

Within this aim, an object of the present invention to provide a filter whose filtration structure is environmentally compatible.

Another object of the present invention is to provide a filter whose filtering structure allows filtration which is not superficial but in depth.

Another object of the present invention is to provide a filter that is highly reliable, relatively simple to provide and has competitive costs.

This aim, as well as these and other objects which will become better apparent hereinafter, are achieved by a filter comprising a filtering element, characterized in that said filtering element is made of a plant fiber selected among hemp, kenaf, jute and agave.

### Brief description of the drawings

Further characteristics and advantages of the invention will become better apparent from the description of preferred but not exclusive embodiments of the filter according to the present invention.

The particularity of the filter according to the invention is that it provides a filtering element with a filtering structure made of plant fiber and specifically hemp or kenaf, jute, agave and other similar fibers. The filtering structure of the filter is provided by means of non-woven fibers, made of felt, agglomerated, cold- and hot-pressed, thermoformed, in paste, in fiber or tuft. The fibers described above are used in assembled products of fiber and other components with a compaction and agglomeration function or for giving structure and shape to said filter or for improving its functional characteristics. These additional components are present in the filtering structure in percentages up to 50%.

The fiber that is used to provide the filtering structure is in original form and not converted into paper and/or fabric. The distribution of the fiber originates from the process for manufacturing it, and it is not woven.

Filtration does not occur on a surface, but rather in depth, in the internal structure of the filter, utilizing all of its fibers progressively.

The degrees of separation/filtration can be selected by operating on the compactness of the filter. Higher densities produce finer filtrations.

The filtering material provided with the fibers listed above can be used in the form of an intermediate product or can be inserted as a filler element in order to provide filters that avoid disposal of the container that gives said filter its shape.

Filters with automatic regeneration may further be provided which have a system that loads the filtering substance or material into the container and, in a controlled or automated manner, replace the used filtering material with the fresh filtering material.

The filtering element made of plant fiber, such as hemp, kenaf, jute, agave and other similar ones can be used to provide filters, separators, washers, absorbers, purifiers, sanitizers. The filters can be used for gas filters, for liquid filters, for use with pressurized fluids, for use with fluids in partial vacuum, for use with fluids at atmospheric pressure. The filters can be used in raw and processed form to filter any type of pollutant.

The filters can be used for industrial and civil use, in the automotive and transport sector in general, in power generation, and they can be used in static and dynamic applications.

The filtering element can be used in the form of a filler of rigid containers, in the form of a filler of flexible containers, or it can be used in a predetermined form with industrial processes.

The advantage that can be obtained with filters provided with the filtering structure as described above consists in that the material used is environmentally sustainable, environmentally compatible, biodegradable, recoverable by heat, non-allergic and non-toxic.

This entails the absence of risks for workers assigned to its processing, is suitable for organic crops, does not require the use of pesticides and fertilizers, and allows the recovery of dry and uncultivated land.

Moreover, for cultivation of the material that constitutes the filtering medium, there is a minimal consumption of energy of fossil origin and therefore carbon dioxide emissions are reduced.

Moreover, in order to send the filtering material to thermal recovery, no preliminary operations for separation from parts that cannot be incinerated are needed, and since this is plant material its recovery does not contribute to the greenhouse effect, since no substances of fossil origin are burned.

Moreover, with respect to filters made of cellulose, it is not necessary to use wood, which is an advantage in the preservation of woodlands.

In practice it has been found that the filter according to the present invention fully achieves the intended aim and objects.

## Claims

1. A filtering element which is made of a plant fiber selected among hemp, kenaf, jute and agave, **characterized in that** it comprises additives with compaction and agglomeration functions, in a percentage up to 50% by weight with respect to the percentage of said plant fiber, and **in that** said plant fiber is used in its original form and not converted into paper and/or fabric.

2. The filtering element according to claim 1, **characterized in that** said plant fiber is used in one of the following types: non-woven, felt, agglomerated, cold- and hot-pressed, thermoformed, in paste, in fiber or in tufts.

3. A filter suitable to be used for filtering liquid and gaseous fluids, dust, fibers, pollens, aerosols, vapors, fumes, gases and mists, comprising a filtering element according to claim 1 or 2.

## Patentansprüche

1. Ein Filterelement, das aus einer Pflanzenfaser hergestellt ist, gewählt aus Hanf, Kenaf, Jute und Agave; **dadurch gekennzeichnet, dass** es Zusatzstoffe mit Verdichtungs- und Agglomerationsfunktionen in einem Prozentsatz von bis zu 50 Gewichtsprozent mit Bezug auf den Prozentsatz der Pflanzenfaser umfasst, und dadurch, dass die Pflanzenfaser in ihrer ursprünglichen Form und nicht in Papier und/oder Textilien umgewandelt verwendet wird.

2. Das Filterelement gemäß Anspruch 1, **dadurch gekennzeichnet, dass** die Pflanzenfaser in einer der folgenden Formen verwendet wird: Vlies, Filz, agglomeriert, kalt- und warmgepresst, warmgeformt, als Paste, als Faser oder in Büscheln.

3. Ein Filter, geeignet für die Verwendung zum Filtern von flüssigen und gasförmigen Fluiden, Staub, Fasern, Pollen, Aerosolen, Dämpfen, Rauch, Gasen und Nebeln, das ein Filterelement gemäß Anspruch 1 oder 2 umfasst.

## Revendications

1. Elément filtrant qui est constitué d'une fibre végétale choisie parmi du chanvre, du kenaf, du jute et de l'agave, **caractérisé en ce qu'**il comporte des additifs ayant des fonctions de compactage et d'agglomération, dans un pourcentage allant jusqu'à 50 % en poids par rapport au pourcentage de ladite fibre végétale, et **en ce que** ladite fibre végétale est utilisée sous sa forme d'origine et non convertie en papier et/ou en toile.

2. Elément filtrant selon la revendication 1, **caractérisé en ce que** ladite fibre végétale est utilisée dans l'un des types suivants : non-tissé, feutre, aggloméré, pressé à froid et à chaud, thermoformé, en pâte, en fibre ou en touffes.

3. Filtre adapté pour être utilisé pour filtrer des fluides liquides et gazeux, des poussières, des fibres, des pollens, des aérosols, des vapeurs, des fumées, des gaz et des brouillards, comportant un élément filtrant selon la revendication 1 ou 2.
